# EUROPÄISCHE PATENTSCHRIFT

(11) **EP 0 651 690 B1**
(45) Veröffentlichungstag und Bekanntmachung des Hinweises auf die Patenterteilung: **05.03.1997**
(21) Anmeldenummer: 94915136.9
(22) Anmeldetag: 28.04.1994
(51) Int. Cl.: B27B 27/06, G01B 7/30, G01D 5/16, B43L 13/08

(54) **DOPPELSEITIGER GEHRUNGSANSCHLAG FÜR WERKZEUGMASCHINEN, INSBESONDERE FORMATKREISSÄGEN**
DOUBLE-SIDED MITER BOX FOR MACHINE-TOOLS, IN PARTICULAR PANEL SAWS
BOITE A ONGLETS A DOUBLE FACE POUR MACHINES-OUTILS, NOTAMMENT DES SCIES CIRCULAIRES DE MISE AU FORMAT

(30) Priorität: 04.05.1993 DE 9306681 U
(43) Veröffentlichungstag der Anmeldung: 10.05.1995
(73) Patentinhaber: Wilhelm Altendorf GmbH & Co. KG, D-32429 Minden (DE)
(72) Erfinder: MOERES, Reiner, D-33649 Bielefeld (DE)
(74) Vertreter: Eisenführ, Speiser & Partner
(86) Internationale Anmeldenummer: EP9401336
(87) Internationale Veröffentlichungsnummer: WO9425230

(56) Entgegenhaltungen:
- EP-A- 0 368 687
- DE-C- 236 451
- FR-A- 2 327 870
- GB-A- 2 092 312

## Beschreibung

Die Erfindung betrifft einen doppelseitigen Gehrungsanschlag für Werkzeugmaschinen, insbesondere Formatkreissägen, mit zwei relativ zum angetriebenen Werkzeug einseitig angeordneten und verfahrbaren Anschlagschienen, die einen rechten Winkel zwischen sich einschließend miteinander verbunden sind, wobei die Anschlagschienen gemeinsam um eine Drehachse verschwenkbar gelagert sind und Mittel zur Bestimmung des Verschwenkwinkels vorgesehen sind.

Derartige Gehrungsanschläge werden vornehmlich zum winkligen Zuschneiden von Brettern und Leisten aus Holz oder Kunststoff auf Formatkreissägen verwendet. Durch die doppelseitige Ausführung können Werkstücke unterschiedlicher Breiten auf einfache Weise so auf Gehrung geschnitten werden, daß die Schnittflächen gleiche Längen aufweisen (DE-PS 236 451 oder DE-PS-3844625).

Für eine Einstellung des Verschwenk- und somit des Schnittwinkels kommen im Stand der Technik Anzeigeskalen und elektrische Meßsysteme zur Anwendung, letztere beispielsweise in Form eines Drehpotentiometers, das nahe der Drehachse angeordnet ist, den Verschwenkwinkel mechanisch abtastet und gegebenenfalls über ein die Drehung übersetzendes Getriebe betrieben wird. Nachteilig bei diesem System ist der relativ hohe Aufwand zur Erzielung einer hohen Meßgenauigkeit und die Anfälligkeit der mechanischen Teile.

Bei einer zusätzlich zur Einstellung eines geeigneten Schnittwinkels vorzunehmenden Längeneinstellung durch Verschieben von Anschlagklappen auf den Anschlagschienen kommt es zu der Schwierigkeit, daß sich der Abstand zwischen einer Anschlagklappe und dem Sägeblatt während der Einstellung des Verschwenkwinkels ändert, was darauf zurückzuführen ist, daß die Drehachse der Anschlagschienen in einem Abstand zur Werkzeugebene angeordnet ist. Die an den Anschlagschienen üblicherweise vorgesehenen Abstandsmeßsysteme für eine Einstellung und Anzeige des Abstands einer Anschlagklappe vom Sägeblatt sind also nur geeignet, für einen bestimmten Schwenkwinkel den wahren Abstandswert anzuzeigen. Demzufolge kann eine korrekte Werkstücklänge bei unterschiedlichen Gehrungswinkeln nur durch ausprobierendes, manuelles Verschieben einer Anschlagklappe erzielt werden.

Der Erfindung liegt daher die Aufgabe zugrunde, einen konstruktiv einfachen Gehrungsanschlag anzugeben, bei dem der Verschwenkwinkel exakt ermittel und angezeigt wird.

Diese Aufgabe wird mit den Merkmalen des Anspruch 1 gelöst.

Der elektrische Meßwertgeber eines erfindungsgemäßen Gehrungsanschlages weist keine störungsanfälligen mechanischen Elemente auf und ist somit besonders zuverlässig. Darüberhinaus wird auch kein Übersetzungsgetriebe zur Erhöhung der Auflösung benötigt, da mit Hilfe des entlang des Teilkreises angeordneten kodierten Maßbandes eine besonders hohe Meßgenauigkeit erreicht wird, die durch Vergrößerung des Radius des Teilkreises erhöht werden kann. Aufgrund der berührungslosen Abtastung des Maßbandes durch den Sensor werden Abnutzungserscheinungen vermieden.

Vorteilhafterweise ist das magnetisch kodierte Maßband entlang des Teilkreises relativ zu einer zwischen den Anschlagschienen aufgespannten Ebene an einer senkrecht verlaufenden Fläche angebracht, weil sich das Maßband, welches üblicherweise als flacher, flexibler Streifen ausgeformt ist, besonders einfach und ohne mechanische Biegespannungen enlang des Teilkreises verlegen läßt und vor Ablagerungen von Staub geschützt ist.

Eine vorteilhafte Ausführungsform eines Gehrungsanschlages, der mit einem in bezug auf die Werkzeugebene unverschwenkbaren Ansatz des Gehrungsanschlags versehen ist, zeichnet sich dadurch aus, daß das Display und der das Maßband abtastende Sensor an einem Ende des Ansatzes angeordnet sind. Somit ist das Display aufgrund eines geringen Abstandes einfach vom Bedienungspersonal abzulesen, und der Sensor ist nahe am Display angeordnet, so daß nur kurze Signalleitungen nötig sind.

Besonders vorteilhaft ist ein Gehrungsanschlag mit mindestens einer Anschlagklappe, die längsverschieblich, aber feststellbar auf einer Anschlagschiene gelagert ist, und bei dem an einer Anschlagklappe ein Sensor befestigt ist, der ein entlang einer Anschlagschiene angebrachtes Maßband berührungslos abtastet, und von dem eine elektrische Verbindung zum Display besteht, auf dem die Relativstellung der Anschlagklappe zur Anschlagschiene anzeigbar ist, weil somit ein Wert für die Relativstellung der Anschlagklappe und somit der Werkstücklänge vorhanden ist.

Besonders vorteilhaft ist eine Ausführungsform, bei der ein vom Maßband der Anschlagschiene abgenommener Längenwert in einem Rechner durch das vom entlang des Teilkreises angeordneten Maßband abgenommene Winkelmaß derart korrigiert wird, daß das Display den tatsächlichen Abstand der Anschlagklappe vom Werkzeug anzeigt. Auf diese Weise ist es dem Bedienungspersonal auf einfachste Weise möglich, die gewünschte Werkstofflänge für beliebige Verschwenkwinkel durch Verschieben der Anschlagklappe einzustellen, denn der tatsächliche, vom Verschwenkwinkel abhängige Abstand der Anschlagklappe vom Werkzeug wird auf dem Display angezeigt. Die im Stand der Technik schwierige Abstandseinstellung durch Ausprobieren ist bei einem erfindungsgemäßen Gehrungsanschlag hinfällig.

Eine weitere vorteilhafte Ausführungsform zeichnet sich dadurch aus, daß jede Anschlagklappe auf der Anschlagschiene mit Hilfe eines elektrischen Schrittmotors verfahrbar ist, so daß ein manuelles Verschieben der Anschlagklappe entfällt. Vorteilhaft ist, wenn ein in den Rechner eingebbarer Wert des Abstands der Anschlagklappe vom Werkzeug durch das vom entlang des Teilkreises angeordneten Sensor abgenommene Winkelmaß im Rechner verarbeitet wird und dieser ein Signal an den Schrittmotor liefert, so daß die Anschlagklappe in jeder Verschwenkstellung der Anschlagschienen auf den eingegebenen Wert des Abstands der Anschlagklappen vom Werkzeug verfahren wird, weil der Bedienungskomfort dadurch besonders hoch ist, daß die Anschlagklappen bei Verschwenkung der Anschlagschienen automatisch verfahren und somit exakte Werkstücklängen erzielt werden. Diese Ausführungsform wird weitergebildet, indem am Display eine numerische Tastatur angeordnet ist, mit der der gewünschte Wert des Abstands der Anschlagklappe vom Werkzeug manuell in den Rechner eingebbar ist.

Ist gemäß einer Weiterbildung der Erfindung zwischen den Anschlagschienen eine mit diesen fest verbundene Viertelkreisplatte angeordnet, so ist auf diese Weise eine feste Verbindung zwischen den Anschlagschienen hergestellt, das Maßband kann an dieser befestigt werden, und zusätzlich kann entlang der Viertelkreisplatte eine Winkelskala vorgesehen sein. Diese Weiterbildung wird durch ein manuell betätigbares Reibrad verbessert, das an dem in bezug auf die Werkzeugebene unverschwenkbaren Ansatz gelagert und form- oder reibschlüssig mit einem Teil der Viertelkreisplatte in Eingriff steht, so daß der Verschwenkwinkel der Anschlagschienen durch Drehung des Reibrades exakt einstellbar ist, woraus genaue Werkstückabmessungen resultieren.

Sind die Anschlagschienen in jedem eingestellten Verschwenkwinkel mit Hilfe von Klemm-Mitteln festlegbar, wird der Bedienungskomfort weiter gesteigert.

Vorteilhafterweise sind der Rechner und die Anzeigeeinheit in einem gemeinsamen Gehäuse untergebracht, um Herstellungskosten zu verringern.

Eine Weiterbildung der Erfindung sieht vor, daß die elektrischen und elektronischen Bauteile des Gehrungsanschlages von einer Batterie mit Spannung versorgt werden. Folglich kann der gesamte Gehrungsanschlag nach einfachem Aufstecken auf einen Rollwagen einer Formatkreissäge in Betrieb genommen werden, ohne daß eine externe Spannungsversorgung hergestellt werden müßte.

Vorteilhafterweise ist das Display von Winkel- auf Längenmaße umstellbar, um Herstellungskosten zu minimieren.

Die vorliegende Erfindung wird im folgenden beispielshalber unter Bezugnahme auf die beiliegenden Zeichnungen beschrieben. Es zeigen:
- Fig. 1: einen doppelseitigen Gehrungsanschlag mit Viertelkreisplatte und Display sowie einem Werkzeug in Form eines Sägeblatts, das in einer Werkzeugebene liegt, als Draufsicht;
- Fig. 2: den Gehrungsanschlag aus Fig. 1 in verschwenkter Stellung; und
- Fig. 3: einen das Maßband berührungslos abtastenden Sensor, Klemm-Mittel zum Festlegen eines eingestellten Verschwenkwinkels sowie ein Display mit Rechner als Schnittdarstellung, die in Fig. 1 mit X-X gekennzeichnet ist.

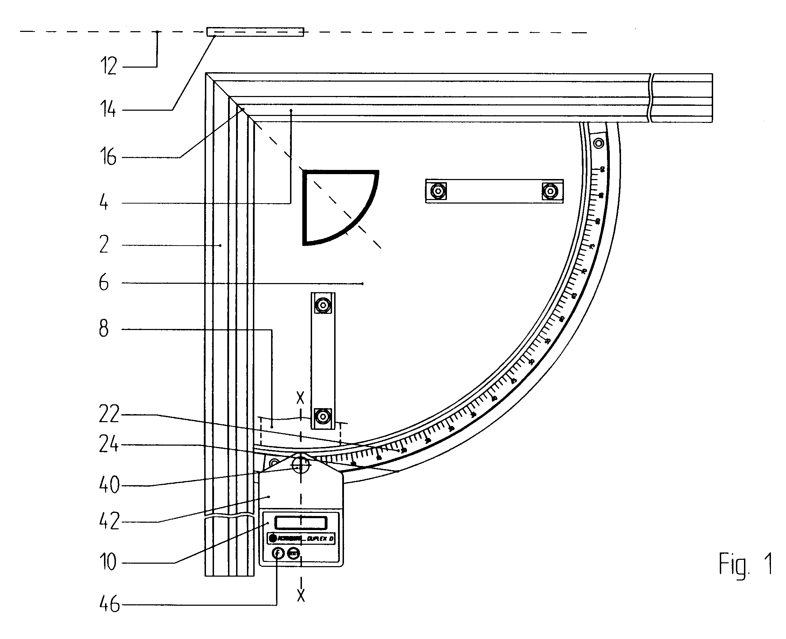

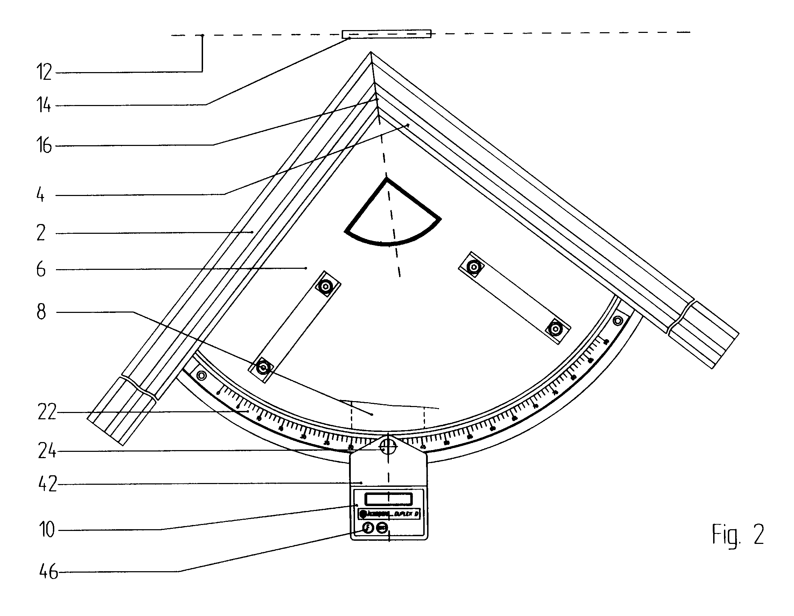

Die in den Fig. 1 und 2 dargestellte erfindungsgemäße Ausführungsform eines Gehrungsanschlags umfaßt im wesentlichen zwei rechtwinklig zueinander angeordnete Anschlagschienen 2 und 4, eine zwischen den beiden Anschlagschienen 2, 4 angeordnete und mit diesen fest verbundene Viertelkreisplatte 6 sowie einen unverschwenkbaren Ansatz 8, der unterhalb der Viertelkreisplatte 6 angeordnet ist und an dessen einem Ende ein Display 10 in einem Gehäuse 42 angebracht ist. Der Gehrungsanschlag 1 ist an einem Rollwagen einer Formatkreissäge befestigt, der in bezug auf ein in einer Werkzeugebene 12 liegendes Sägeblatt 14 verfahrbar ist. Der Rollwagen kann manuell parallel zur Werkzeugebene 12 verschoben werden. Alternativ könnte der Gehrungsanschlag 1 an einem ortsfesten Teil der Formatkreissäge befestigt und das Sägeblatt 14 in der Werkzeugebene 12 verfahrbar sein.

Die Anschlagschienen 2, 4 sind gemeinsam mit der Viertelkreisplatte 6 mit Hilfe eines Kugellagers an einem Teil des unverschwenkbaren Ansatzes 8 gelagert, so daß sie relativ zur Werkzeugebene 12 um eine Drehachse 16 verschwenkt werden können. Die Drehachse 16 ist senkrecht zu einer zwischen den Anschlagschienen 2, 4 aufgespannten Ebene auf einer Winkelhalbierenden zwischen den Anschlagschienen 2, 4 nahe dem Sägeblatt 14 angeordnet.

In bekannter Weise können auf den Anschlagschienen 2, 4 nicht dargestellte Anschlagklappen längsverschieblich, aber feststellbar gelagert werden, an denen die zu bearbeitenden Werkstücke zur Anlage gebracht werden können, um die gewünschte Werkstücklänge zu erzielen. Entlang der Anschlagschienen 2, 4 sind magnetisch kodierte Maßbänder angebracht, die berührungslos von an den Anschlagklappen befestigten Sensoren abgetastet werden. In einem Sensor wird ein elektrisches Signal erzeugt, welches ein Maß für die Relativstellung einer Anschlagklappe in bezug zur Anschlagschiene ist und das in Form eines Längenwertes mit Hilfe einer elektrischen Leitung auf dem Display 10 zur Anzeige gebracht werden kann. An den Anschlagschienen 2, 4 kann zusätzlich ein herkömmliches Maßband angebracht sein.

In Fig. 2 sind die Anschlagschienen 2, 4 in verschwenkter Position dargestellt, während der Ansatz 8 und das Display 10 eine unveränderte Position einnehmen.

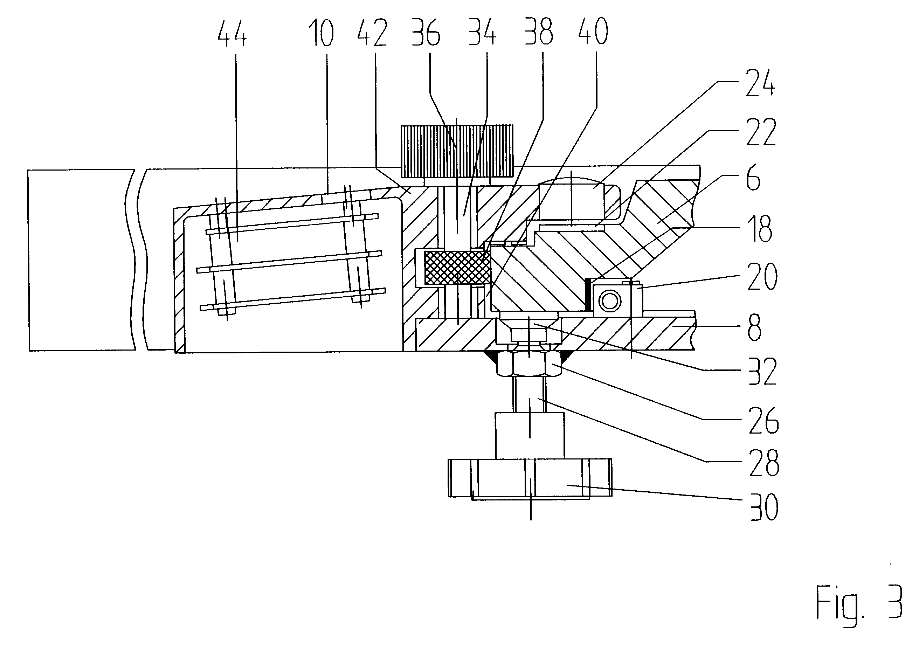

Anhand der Fig. 2 und 3 wird ein elektrischer Meßwertgeber zur Ermittlung und Anzeige des Verschwenkwinkels auf dem Display 10 beschrieben, der im wesentlichen aus einem magnetisch kodierten, entlang eines Teilkreises um die Drehachse 16 angeordneten Maßband 18 und einem das Maßband berührungslos abtastenden Sensor 20 besteht. Das flexible Maßband 18 hat im Querschnitt eine rechteckige Form und ist an einer relativ zu der zwischen den Anschlagschienen 2, 4 aufgespannten Ebene senkrecht verlaufenden Fläche angebracht. Die senkrecht verlaufende Fläche ist Teil der Unterseite der Viertelkreisplatte 6, so daß das Maßband 18 vor äußeren Einwirkungen oder Ablagerungen, beispielsweise von Staub, geschützt ist. Der Sensor 20 ist in geringem Abstand zum Maßband 18 an einem Ende des unverschwenkbaren Ansatzes 8 angeschraubt und liefert ein Signal über eine nicht dargestellte elektrische Leitung zum Display 10, auf dem der Meßwert des Sensors 20 als Winkelmaß des Verschwenkwinkels angezeigt wird. An der Oberseite der Viertelkreisplatte 6 ist eine Winkelskala 22 angebracht, deren Ziffern in vergrößerter Darstellung mittels einer Lupe 24 abgelesen werden können.

An der Unterseite des Ansatzes 8 ist eine Mutter 26 aufgeschweißt, deren Innengewinde mit einem Teil eines Außengewindes einer Klemmschraube 28 in Eingriff steht. Am unteren Ende der Klemmschraube 28 ist ein Griff 30 zum manuellen Verdrehen der Klemmschraube 28 angebracht, während am anderen Ende der Klemmschraube 28 ein Stößel 32 angebracht ist, dessen kreisförmige obere Oberfläche mit der Unterseite der Viertelkreisplatte 6 durch Verdrehen der Klemmschraube 28 in und außer Berührung bringbar ist. Bei einer ausreichend starken Anpreßkraft zwischen dem Stößel 32 und der Viertelkreisplatte 6 ist eine Verschwenkung der Anschlagschienen 2, 4 gegenüber dem Ansatz 8 und somit gegenüber der Werkzeugebene 12 nicht möglich. Auf diese Weise können die Anschlagschienen 2, 4 in einem eingestellten Verschwenkwinkel festgelegt werden.

Ein an einem Bolzen 34 angebrachtes Reibrad 38 ist drehbar an einem Ende des Ansatzes 8 gelagert, und die Umfangsfläche des Reibrades 38 steht mit einem Teil der Seitenfläche 40 der Viertelkreisplatte 6 in Eingriff.

Durch Drehen an einem Rändel 36 werden die Viertelkreisplatte 6 und somit die Anschlagschienen 2, 4 durch Kraftübertragung am Reibrad 38 verschwenkt, und der Verschwenkwinkel ist exakt einstellbar. Der Bolzen 34 könnte alternativ in dem Gehäuse 42 gelagert sein.

Innerhalb des Gehäuses 42, das fest mit dem Ansatz 8 verbunden ist, sind ein Rechner 44 und das Display 10 untergebracht. Auch ist die Lupe 24 an einem Teil des Gehäuses 42 eingesetzt. Der Sensor 20 sowie die Sensoren der Anschlagklappen 2, 4 sind in nicht dargestellter Weise mittels elektrischer Leitungen mit Eingangsanschlüssen des Rechners 44 verbunden, von dessen Ausgangsanschlüssen elektrische Leitungen zum Display 10 gehen. Der Rechner 44 umfaßt im wesentlichen einen AD-Wandler sowie einen Mikroprozessor. Sämtliche elektrische und elektronische Bauteile des Gehrungsanschlages 1 werden von einer in dem Gehäuse 42 untergebrachten Batterie mit Strom versorgt. Alternativ kann die elektrische Stromversorgung dadurch realisiert sein, daß über Anschlußstecker eine Verbindung zu einem externen Stromnetz hergestellt werden kann. Das Display 10 kann über eine Tastatur 46 durch manuelle Eingabe von Winkel- auf Längenmaße umgestellt werden, die mit Hilfe von von dem Rechner 44 gelieferten elektrischen Signalen auf dem Display 10 zur Anzeige gebracht werden können. Die Tastatur 46 kann alternativ Ziffernfelder aufweisen.

In nicht dargestellter Weise können die Anschlagklappen 2, 4 mit Hilfe von elektrischen Schrittmotoren auf den Anschlagschienen 2, 4 verfahren werden. Beispielsweise könnten innerhalb der Anschlagschienen 2, 4 gelagerte Gewindespindeln von an den freien Enden der Anschlagschienen 2, 4 befestigten Schrittmotoren angetrieben werden, und die Anschlagklappen stehen mit den Gewindespindeln in Eingriff, so daß sie bei Drehung der Spindeln in Bewegung gesetzt werden.

In dem Rechner 44 ist ein Datenverarbeitungsprogramm gespeichert, mit dessen Hilfe ein vom Maßband der Anschlagschienen 2, 4 abgenommener Längenwert durch das vom entlang des Teilkreises angeordnete Maßband 18 abgenommene Winkelmaß des Verschwenkwinkels derart korrigiert wird, daß das Display 10 den tatsächlichen Abstand der Anschlagklappe vom Sägeblatt 14 anzeigt. Da sich beim Verschwenken der Anschlagschienen 2, 4 der Abstand einer Anschlagklappe vom Sägeblatt 14 verändert, was zur Folge hätte, daß sich die Länge eines Werkstückes beim Verschwenken verändern würde, werden mit Hilfe des Datenverarbeitungsprogrammes das Winkelmaß des Verschwenkwinkels sowie das Maß für die Relativstellung der Anschlagklappe auf der Anschlagschiene unter Verwendung trigonometrischer Funktionen und der geometrischen Verhältnisse derart verarbeitet, daß das Display 10 den tatsächlichen Abstand anzeigt. Eine Anschlagklappe kann vom Bedienungspersonal somit in jeder beliebigen Verschwenkstellung der Anschlagschienen 2, 4 in eine den gewünschten Werkstückabmessungen entsprechende Position verschoben werden.

Bei einer nicht dargestellten Ausführungsform kann die gewünschte Werkstücklänge mit Hilfe einer numerischen Tastatur in den Rechner eingegeben werden. Bei Verschwenken der Anschlagschienen 2, 4 werden die Anschlagklappen automatisch mit Hilfe von Schrittmotoren in die richtige, den Werkstückmaßen entsprechende Position verfahren, nachdem der Rechner den korrigierten Abstandswert ermittelt hat.

## Patentansprüche

1. Doppelseitiger Gehrungsanschlag für Werkzeugmaschinen, insbesondere Formatkreissägen, mit
zwei relativ zum angetriebenen Werkzeug (14) einseitig angeordneten und verfahrbaren Anschlagschienen (2, 4),
die einen rechten Winkel zwischen sich einschließend miteinander verbunden sind, wobei
die Anschlagschienen (2, 4) gemeinsam um eine Drehachse (16) verschwenkbar gelagert sind
und Mittel zur Bestimmung des Verschwenkwinkels vorgesehen sind,
dadurch gekennzeichnet, daß
die Drehachse (16) mit seitlicher Distanz zum Werkzeug (14) auf der Winkelhalbierenden der Anschlagschienen (2, 4) angeordnet ist,
ein elektrischer Meßwertgeber zur Ermittlung des Verschwenkwinkels der Anschlagschienen (2, 4) in bezug auf eine Werkzeugebene (12) und
ein Display (10) zur Anzeige des Verschwenkwinkels vorgesehen sind,
wobei der elektrische Meßwertgeber aus einem magnetisch kodierten Maßband (18), das entlang eines Teilkreises um die Drehachse (16) angeordnet ist, und
einem das Maßband (18) berührungslos abtastenden Sensor (20) besteht,
dessen Meßwert als Winkelmaß des Verschwenkwinkels auf dem Display (10) angezeigt wird.

2. Gehrungsanschlag nach Anspruch 1,
dadurch gekennzeichnet, daß das magnetisch kodierte Maßband (18) entlang des Teilkreises relativ zu einer zwischen den Anschlagschienen (2, 4) aufgespannten Ebene an einer senkrecht verlaufenden Fläche angebracht ist.

3. Gehrungsanschlag nach Anspruch 1 und/oder 2, mit einem in bezug auf die Werkzeugebene (12) unverschwenkbaren Ansatz (8) des Gehrungsanschlags,
dadurch gekennzeichnet, daß das Display (10) und der das Maßband (18) abtastende Sensor (20) an einem Ende des Absatzes (8) angeordnet sind.

4. Gehrungsanschlag nach mindestens einem der vorherigen Ansprüche, mit mindestens einer Anschlagklappe, die längsverschieblich, aber feststellbar auf einer Anschlagschiene (2, 4) gelagert ist,
dadurch gekennzeichnet, daß an einer Anschlagklappe ein Sensor befestigt ist, der ein entlang einer Anschlagschiene (2, 4) angebrachtes Maßband berührungslos abtastet, und von dem eine elektrische Verbindung zum Display (10) besteht, auf dem die Relativstellung der Anschlagklappe zur Anschlagschiene (2, 4) anzeigbar ist.

5. Gehrungsanschlag nach mindestens einem der vorherigen Ansprüche,
dadurch gekennzeichnet, daß ein vom Maßband der Anschlagschiene abgenommener Längenwert in einem Rechner (44) durch das vom entlang des Teilkreises angeordneten Maßband (18) abgenommene Winkelmaß derart korrigiert wird, daß das Display (10) den tatsächlichen Abstand der Anschlagklappe vom Werkzeug (14) anzeigt.

6. Gehrungsanschlag nach mindestens einem der vorherigen Ansprüche,
dadurch gekennzeichnet, daß jede Anschlagklappe auf der Anschlagschiene (2, 4) mit Hilfe eines elektrischen Schrittmotors verfahrbar ist.

7. Gehrungsanschlag nach Anspruch 6,
dadurch gekennzeichnet, daß ein in den Rechner (44) eingebbarer Wert des Abstands der Anschlagklappe vom Werkzeug (14) durch das vom entlang des Teilkreises angeordneten Sensor (20) abgenommene Winkelmaß im Rechner (44) verarbeitet wird und dieser ein Signal an den Schrittmotor liefert, so daß die Anschlagklappe in jeder Verschwenkstellung der Anschlagschienen (2, 4) auf den eingegebenen Wert des Abstands der Anschlagklappen vom Werkzeug (14) verfahren wird.

8. Gehrungsanschlag nach Anspruch 7,
dadurch gekennzeichnet, daß am Display (10) eine numerische Tastatur angeordnet ist, mit der der Wert des Abstands der Anschlagklappe vom Werkzeug (14) manuell in den Rechner (44) eingebbar ist.

9. Gehrungsanschlag nach mindestens einem der vorherigen Ansprüche,
dadurch gekennzeichnet, daß zwischen den Anschlagschienen (2, 4) eine mit diesen fest verbundene Viertelkreisplatte (6) angeordnet ist.

10. Gehrungsanschlag nach Anspruch 9,
gekennzeichnet durch ein manuell betätigbares Reibrad (38), das an dem in bezug auf die Werkzeugebene unverschwenkbaren Ansatz (8) gelagert ist und form- oder reibschlüssig mit einem Teil der Viertelkreisplatte (6) in Eingriff steht, so daß der Verschwenkwinkel der Anschlagschienen (2, 4) durch Drehung des Reibrades (38) exakt einstellbar ist.

11. Gehrungsanschlag nach mindestens einem der vorherigen Ansprüche,
dadurch gekennzeichnet, daß die Anschlagschienen (2, 4) in jedem eingestellten Verschwenkwinkel mit Hilfe von Klemm-Mitteln festlegbar sind.

12. Gehrungsanschlag nach mindestens einem der vorherigen Ansprüche,
dadurch gekennzeichnet, daß der Rechner (44) und das Display (10) in einem gemeinsamen Gehäuse (42) untergebracht sind.

13. Gehrungsanschlag nach mindestens einem der vorherigen Ansprüche,
dadurch gekennzeichnet, daß die elektrischen und elektronischen Bauteile des Gehrungsanschlages von einer Batterie mit Spannung versorgt werden.

14. Gehrungsanschlag nach mindestens einem der vorherigen Ansprüche,
dadurch gekennzeichnet, daß das Display (10) von Winkelauf Längenmaße umstellbar ist.

## Claims

1. Double-sided mitre box for machine tools, in particular panel saws, with
two movable stop rails (2, 4) disposed at one end relative to the driven tool (14),
which stop rails, enclosing a right angle between themselves, are connected together,
the stop rails (2, 4) being mounted to pivot in common about an axis of rotation (16),
and means being provided for determining the pivot angle,
characterised in that
the axis of rotation (16) is disposed at a lateral distance from the tool (14) on the bisecting line of the angle of the stop rails (2, 4),
an electrical measurement-value emitter for determining the pivot angle of the stop rails (2, 4) with respect to a tool plane (12), and
a display (10) for indicating the pivot angle are provided,
the electrical measurement-value emitter comprising a magnetically-coded measurement strip (18), which is disposed along a reference circle about the axis of rotation (16), and
further comprising a sensor (20) scanning the measurement strip (18) in a non-contacting manner,
whose measurement value is indicated on the display (10) as an angular measurement of the pivot angle.

2. Mitre box according to claim 1,
characterised in that the magnetically-coded measurement strip (18) is attached to a vertically-extending surface along the reference circle relative to a plane mounted between the stop rails (2, 4).

3. Mitre box according to claim 1 and/or 2, with a projection (8) of the mitre box which is non-pivotable with reference to the tool plane (12),
characterised in that the display (10) and the sensor (20) scanning the measurement strip (18) are disposed at one end of the projection (8).

4. Mitre box according to at least one of the preceding claims, with at least one stop flap which is longitudinally displaceably but securably mounted on a stop rail (2, 4),
characterised in that attached to one stop flap is a sensor which scans in a non-contacting manner a measurement strip attached along a stop rail (2, 4), and from which an electrical connection exists to the display (10), upon which the relative position of the stop flap to the stop rail (2, 4) may be indicated.

5. Mitre box according to at least one of the preceding claims,
characterised in that a length value derived from the measurement strip of the stop rail is corrected in a computer (44) by the angular measurement derived from the measurement strip (18) disposed along the reference circle, in such a way that the display (10) indicates the actual distance of the stop flap from the tool (14).

6. Mitre box according to at least one of the preceding claims,
characterised in that each stop flap is movable on the stop rail (2, 4) with the aid of an electrical stepping motor.

7. Mitre box according to claim 6,
characterised in that a value of the distance of the stop flap from the tool (14), which may be input into the computer (44), is processed by the angular measurement derived from the sensor (20) disposed along the reference circle in the computer (44), and the latter passes a signal to the stepping motor so that the stop flap, in every pivoted position of the stop rails (2, 4), is shifted to the input value of the distance of the stop flaps from the tool (14).

8. Mitre box according to claim 7,
characterised in that there is disposed on the display (10) a numerical keyboard by means of which the value of the distance of the stop flap from the tool (14) may be manually input into the computer (44).

9. Mitre box according to at least one of the preceding claims,
characterised in that there is disposed between the stop rails (2, 4) a quadrant plate (6) securely attached to said stop rails.

10. Mitre box according to claim 9,
characterised by a manually-operable friction wheel (38) which is mounted on the projection (8) which is non-pivotable relative to the tool plane, and which is in engagement with a portion of the quadrant plate (6), so that the pivot angle of the stop rails (2, 4) may be precisely adjusted by rotation of the friction wheel (38).

11. Mitre box according to at least one of the preceding claims,
characterised in that the stop rails (2, 4) can be secured in any selected pivot angle with the aid of clamping means.

12. Mitre box according to at least one of the preceding claims,
characterised in that the computer (44) and the display (10) are accommodated in a common housing (42).

13. Mitre box according to at least one of the preceding claims,
characterised in that the electrical and electronic components of the mitre box are supplied with current from a battery.

14. Mitre box according to at least one of the preceding claims,
characterised in that the display (10) may be switched from angular to length measurements.

## Revendications

1. Boîte à onglets à double face pour machines-outils, en particulier des scies circulaires de mise au format, comprenant deux rails de butée (2, 4), déplaçables et disposés unilatéralement par rapport à l'outil (14) actionné, qui sont reliés l'un à l'autre en formant un angle droit, les rails de butée (2, 4) étant montés ensemble de manière à pouvoir pivoter autour d'un axe de rotation (16), et des dispositifs destinés à déterminer l'angle de pivotement, caractérisée en ce que
- l'axe de rotation (16) est disposé sur les bissectrices des rails de butée (2, 4), à une distance latérale déterminée de l'outil (14),
- il est prévu de monter un capteur de mesure électrique, destiné à déterminer l'angle de pivotement des rails de butée (2, 4) par rapport au plan de l'outil (12) et
- un affichage (10), destiné à visualiser l'angle de pivotement, le capteur de mesure électrique étant formé d'un ruban de mesure (18) à codage magnétique, qui est monté autour de l'axe de rotation (16), le long d'un cercle gradué et
- d'un capteur (20), qui lit les valeurs du ruban de mesure (18) sans entrer en contact avec celui-ci, la valeur mesurée par ledit capteur étant visualisée sur l'affichage (10) en tant que mesure angulaire de l'angle de pivotement.

2. Boîte à onglets selon la revendication 1, caractérisée en ce que le ruban de mesure (18) à codage magnétique est monté sur une surface verticale, le long d'un cercle gradué par rapport à un plan qui s'étend entre les rails de butée (2, 4).

3. Boîte à onglets selon la revendication 2 et/ou 3, comprenant un épaulement (8) de la boîte à onglets, qui ne peut pivoter par rapport au plan de l'outil (12), caractérisée en ce que l'affichage (10) et le capteur (20), destiné à lire les valeurs du ruban de mesure (18), sont montés à une extrémité de l'épaulement (8).

4. Boîte à onglets selon l'une quelconque des revendications précédentes, comprenant au moins un clapet de butée, logé de manière à pouvoir se déplacer dans le sens longitudinal, mais de manière à rester fixé sur un rail de butée (2, 4), caractérisée en ce qu'un capteur, fixé sur un clapet de butée, lit les valeurs du ruban de mesure sans entrer en contact avec celui-ci, qui est monté le long d'un rail de butée (2, 4), et établit une connexion électrique avec l'affichage (10), sur lequel est visualisée la position relative du clapet de butée par rapport aux rails de butée (2, 4).

5. Boîte à onglets selon l'une quelconque des revendications précédentes, caractérisée en ce qu'une mesure de longueur, détectée par le ruban de mesure sur le rail de butée, est corrigée dans un ordinateur (44) par la valeur angulaire détectée par le ruban de mesure (18), monté le long du cercle gradué, de telle sorte que la valeur visualisée sur l'affichage (10) définit la distance réelle entre le clapet de butée et l'outil (14).

6. Boîte à onglets selon l'une quelconque des revendications précédentes, caractérisée en ce que chaque clapet de butée peut être déplacé sur le rail de butée (2, 4) à l'aide d'un moteur pas à pas électrique.

7. Boîte à onglets selon la revendication 6, caractérisée en ce que la valeur de la distance entre le clapet de butée et l'outil (14), entrée dans l'ordinateur (44), est traitée dans l'ordinateur (44) par la valeur angulaire, détectée par le capteur (20), monté le long du cercle gradué, et ledit ordinateur émet un signal au moteur pas à pas, de telle sorte que le clapet de butée peut être déplacé en fonction de la valeur de la distance entre les clapets de butée et l'outil (14) entrée, quelle que soit la position de pivotement des rails de butée (2, 4).

8. Boîte à onglets selon la revendication 7, caractérisée en ce qu'un clavier numérique est raccordé à l'affichage (10), permettant d'entrer manuellement dans l'ordinateur (44) la valeur de la distance entre le clapet de butée et l'outil (14).

9. Boîte à onglets selon l'une quelconque des revendications précédentes, caractérisée en ce qu'une plaque (6), formant un quart de cercle, est montée entre les rails de butée (2, 4), avec lesquels elle est assemblée de manière fixe.

10. Boîte à onglets selon la revendication 9, caractérisée par une roue de friction (38) manuelle, qui est montée sur l'épaulement (8), non pivotant par rapport au plan de l'outil, et engrène avec une partie de la plaque en quart de cercle (6) par engagement positif ou par entraînement par friction, de telle sorte que l'angle de pivotement des rails de butée (2, 4) est réglé avec précision par la rotation de la roue de friction (38).

11. Boîte à onglets selon l'une quelconque des revendications précédentes, caractérisée en ce que les rails de butée (2, 4) peuvent être bloqués par des organes de serrage dans chaque position angulaire de pivotement définie.

12. Boîte à onglets selon l'une quelconque des revendications précédentes, caractérisée en ce que l'ordinateur (44) et l'affichage (10) sont montés dans le même boîtier (42).

13. Boîte à onglets selon l'une quelconque des revendications précédentes, caractérisée en ce que les pièces électriques et électroniques de la boîte à onglets sont alimentées par un batterie avec tension.

14. Boîte à onglets selon l'une quelconque des revendications précédentes, caractérisée en ce qu'il est possible de convertir en mesure de longueur la valeur angulaire visualisée sur l'affichage (10).
